# EUROPÄISCHE PATENTSCHRIFT

(11) **EP 2 179 383 B1**
(45) Veröffentlichungstag und Bekanntmachung des Hinweises auf die Patenterteilung: **02.12.2015**
(21) Anmeldenummer: 08801570.6
(22) Anmeldetag: 13.08.2008
(51) Int. Cl.: G06K 19/077

(54) **HOCHGEPRÄGTER KARTENFÖRMIGER DATENTRÄGER**
DATA STORAGE MEDIUM WHICH IS IN THE FORM OF A CARD AND HAS A RAISED AREA
SUPPORT DE DONNÉES EN FORME DE CARTE FORTEMENT GAUFRÉE

(30) Priorität: 14.08.2007 DE 102007038318
(43) Veröffentlichungstag der Anmeldung: 28.04.2010
(73) Patentinhaber: Giesecke & Devrient GmbH, 81677 München (DE)
(72) Erfinder: SCHILLER, Christoph, 81827 München (DE); JANSEN, Jens, CH-6315 Oberägeri (CH)
(86) Internationale Anmeldenummer: PCT/EP2008/006666
(87) Internationale Veröffentlichungsnummer: WO 2009/021730

(56) Entgegenhaltungen:
- EP-A1- 1 023 708
- EP-A1- 1 442 424
- EP-A2- 0 768 620
- US-A- 4 614 861
- US-A- 4 882 477

## Beschreibung

Die vorliegende Erfindung betrifft ein Verfahren zur Herstellung von kartenförmigen portablen Datenträgern mit einer Hochprägung und insbesondere solche Datenträger mit einem in einem Datenträgerkörper des Datenträgers integrierten flächigen Schaltungsträger sowie einen entsprechend ausgebildeten Schaltungsträger.

Eine Form der Personalisierung eines kartenförmigen Datenträgers besteht darin, den Datenträger mit äußerlich wahrnehmbaren Informationen zu versehen, die den späteren Nutzer des Datenträgers betreffen. Dazu wird beispielsweise der Name des Nutzers oder eine den Nutzer kennzeichnende Identifikationsnummer auf den Datenträgerkörper aufgebracht. Dies kann z.B. durch Bedrucken, Lasern oder Hochprägen geschehen.

Beim Hochprägen eines Datenträgers werden Zeichen derart in den Datenträgerkörper eingeprägt, dass diese erhaben und ertastbar aus einer Datenträgeroberfläche hervorstehen. Dazu werden z.B. Metallzeichen mit großer Wucht - nach dem Prinzip einer mechanischen Schreibmaschine - auf das Datenträgerkörpermaterial aufgeschlagen, wodurch die gewünschte Hochprägung entsteht. Dazu ist es notwendig, dass das Material des Datenträgerkörpers, in der Regel ein Kunststoff, dauerhaft verformbar ist. Üblicherweise verwendete Materialien erfüllen diese Anforderung.

Datenträger, die zusätzlich zu einem integrierten Schaltkreis zum Speichern und/ oder Verarbeiten von Daten beispielsweise noch eine Ausgabeeinrichtung, z.B. in Form eines Displays, und/oder eine Eingabeeinrichtung, z.B. in Form einer Tastatur, umfassen, besitzen einen Schaltungsträger (Platine). Während der integrierte Schaltkreis im Vergleich zu dem Datenträgerkörper kleinflächig ist, ist der Schaltungsträger großflächig.

Auf einem solchen Schaltungsträger, der nahezu die gleiche Ausdehnung haben kann wie der Datenträgerkörper selbst, sind die entsprechende Elektronik für die Ein- und Ausgabeeinrichtungen und die Verbindungsleitungen zwischen den verschiedenen Bauteilen und zu dem integrierten Schaltkreis aufgebracht. Dieser Schaltungsträger wird beim Herstellen des Datenträgers in den Datenträgerkörper integriert. Dabei werden die verschiedenen Komponenten, die den Datenträgerkörper bilden, mit dem Schaltungsträger schichtartig verbunden, um den Datenträger schichtweise aufzubauen, wobei der Schaltungsträger flächig zwischen den Komponenten des Datenträgerkörpers zu liegen kommt. Solche Komponenten sind beispielsweise verschiedene Kunststofffolien, Kunststoffspritzgusselemente und dergleichen. Kunststofffolien werden durch Laminieren miteinander bzw. mit dem Schaltungsträger verbunden. Raum für den Schaltungsträger und die verschiedenen darauf befindlichen Bauteile wird in den Komponenten dabei entsprechend ausgespart, etwa in Form von Kavitäten in den Spritzgusselementen oder Aussparungen in den Folien.

Der flächige Schaltungsträger nimmt aufgrund der Anordnung der beschriebenen Bauteile bis auf einen Randbereich die gesamte Fläche des Datenträgers ein. Aus diesem Grund ist der Datenträgerkörper in seinem Inneren auch im Prägebereich, in dem die Hochprägung vorgesehen ist, mit dem Schaltungsträger durchsetzt. Das Material des Schaltungsträgers, beispielsweise Hartpapier (Phenolharz mit Papierfasern) oder eine mit Epoxidharz getränkte Glasfasermatte, ist zwar hinreichend flexibel, um die notwendige Flexibilität des Datenträgers nicht zu beeinträchtigen, jedoch nur sehr schwer dauerhaft, d.h. plastisch, verformbar. Diese Tatsache erschwert das Hochprägen des Datenträgers in einem Bereich des Schaltungsträgers erheblich, denn zum Hochprägen muss der Datenträgerkörper in seiner gesamten Dicke, also einschließlich der durch den Schaltungsträger gebildeten Schicht, dauerhaft verformt werden, was gängige Schaltungsträgermaterialien nicht ohne weiteres zulassen.

EP 0 768 620 A2 offenbart ein Verfahren zum Herstellen eines Datenträgers gemäss dem Oberbegriff Anspruchs 1. Demnach ist es die Aufgabe der vorliegenden Erfindung, ein Hochprägen eines Datenträgers mit integriertem, flächigem Schaltungsträger zu ermöglichen.

Diese Aufgabe wird durch ein Verfahren, einen Datenträger und einen Schaltungsträger mit den Merkmalen der unabhängigen Ansprüche gelöst. Vorteilhafte Ausgestaltungen und Weiterbildungen sind in den abhängigen Ansprüchen angegeben.

Die vorliegende Erfindung basiert auf dem Grundgedanken, den flächigen Schaltungsträger in einem oder mehreren Flächenbereichen mit zumindest einer durchgehenden Öffnung zu versehen. Der Flächenbereich ist dabei so angeordnet, dass er nach dem Einbau des Schaltungsträgers in den Datenträgerkörper mit dem Prägebereich des Datenträgerkörpers überlappt. Dadurch wird eine einfache Verformbarkeit des Datenträgerkörpers beim Hochprägen gewährleistet.

Ein Verfahren zur Herstellung eines portablen kartenförmigen Datenträgers umfasst die Schritte des Bereitstellens des flächigen Schaltungsträgers, des Integrierens des Schaltungsträgers in den kartenförmigen Datenträgerkörper und des Hochprägens des Datenträgerkörpers. Erfindungsgemäß wird dabei in zumindest einen Flächenbereich des Schaltungsträgers zumindest eine durchgehende Öffnung eingebracht, und der Datenträgerkörper wird in einem mit dem Flächenbereich des Schaltungsträgers überlappenden Prägebereich hochgeprägt.

Unter dem Prägebereich des Datenträgerkörpers ist im Kontext der vorliegenden Erfindung derjenige Bereich der Oberfläche des Datenträgerkörpers zu verstehen, in dem eine Hochprägung prinzipiell vorgesehen ist. Das heißt, es ist nicht notwendig der Fall, dass stets in dem gesamtem Prägebereich auch tatsächlich hochgeprägt wird. Eine Hochprägung außerhalb des Prägebereichs ist jedoch nicht vorgesehen. Der Prägebereich kann auch mehrere Teilprägebereiche umfassen, die sich an verschiedenen, räumlich getrennten Positionen des Datenträgerkörpers befinden. Entsprechend umfasst dann auch der Schaltungsträger mehrere erfindungsgemäße Flächenbereiche, um eine Hochprägung in den Prägebereichen zu ermöglichen.

Die Öffnung oder die Öffnungen in dem zumindest einen Flächenbereich des Schaltungsträgers erhöhen die Verformbarkeit des Schaltungsträgers in diesem Bereich, insbesondere in den Bereichen, die an die Öffnungen angrenzen. Dadurch wird auch die Verformbarkeit des gesamten Datenträgers in den Bereichen des Datenträgerkörpers sichergestellt, die mit diesem Flächenbereich überlappen, also die Verformbarkeit im Prägebereich des Datenträgerkörpers. Dies beruht darauf, dass der Schaltungsträger in dem betreffenden Flächenbereich aufgrund der Öffnungen bei einer Verformung des Datenträgerkörpermaterials weniger Widerstand leistet. Das heißt, die durch das Anordnen des Schaltungsträgers in den Datenträgerkörper verursachte stark reduzierte Verformbarkeit des Datenträgers wird durch das Einbringen der durchgehenden Öffnungen wieder erhöht.

Die Öffnungen können aus einer Vielzahl von durchgehenden Schlitzen bestehen, die eine möglichst geringe Weite aufweisen. Das heißt, ein Abtragen von Schaltungsträgermaterial ist zum Bilden der Schlitze gar nicht oder nur in sehr geringem Umfang nötig. Alternativ oder zusätzlich kann die zumindest eine Öffnung als ein durchgehendes Loch oder eine Vielzahl von durchgehenden Löchern ausgebildet sein. Dabei wird Schaltungsträgermaterial in einem gewissen Umfang vollständig entfernt.

Eine Anordnung von Schlitzen erhöht in erster Linie lokal die Flexibilität des Schaltungsträgers im Bereich der Schlitze deutlich. Der Schaltungsträger gibt dadurch einer Krafteinwirkung, wie sie beim Hochprägen des Datenträgerkörpers in dem entsprechenden Bereich auftritt, leichter nach, sodass er sich beim Hochprägen in dem Randbereich der Schlitze leicht verformt.

Bei der Anordnung eines oder mehrere Löcher hingegen ist das Schaltungsträgermaterial im Bereich der Löcher flächig komplett entfernt, sodass einer Verformung des Datenträgerkörpers in diesem Bereich dementsprechend kein Widerstand des Schaltungsträgers entgegensteht. Natürlich können in dem Flächenbereich Schlitze und Löcher gleichermaßen vorhanden sein.

Vorzugsweise werden die Öffnungen vor dem Integrieren des Schaltungsträgers in den Datenträgerkörper in den Flächenbereich des Schaltungsträgers eingebracht. Bisherige Herstellungsverfahren zur Herstellung des Schaltungsträgers müssen dann nur um den Schritt des Einbringens der Öffnungen, etwa durch Stanzen, erweitert werden. Dadurch können weitere Herstellungsschritte, wie z.B. das Integrieren des Schaltungsträgers und das Hochprägen, wie bisher durchgeführt werden, wodurch eine effektive Anpassung bisheriger Produktionsabläufe an das erfindungsgemäße Verfahren möglich ist. Des Weiteren wird ein Beschädigen des Datenträgerkörpers vermieden, welches bei einem Einbringen der Öffnung in den Schaltungsträger nach dem Integrieren desselben kaum zu verhindern wäre.

In der Regel entspricht die flächige Ausdehnung des Flächenbereichs des Schaltungsträgers der flächigen Ausdehnung des Prägebereichs des Datenträgerkörpers. Dadurch ist gewährleistet, dass einerseits Flächenbereiche des Schaltungsträgers nicht unnötigerweise mit durchgehenden Öffnungen versehen werden. Andererseits ist aber sichergestellt, dass in dem gesamten Bereich des Datenträgers, der durch den Prägebereich des Datenträgerkörpers definiert ist, durch das Einbringen der Öffnungen eine nachfolgende Hochprägung ermöglicht wird.

Gemäß einer bevorzugten Ausführungsform werden die Öffnungen in Form einer Vielzahl von Löchern, Schlitzen oder dergleichen oder einer Kombination dieser oder ähnlicher Elemente in den Flächenbereich des Schaltungsträgers eingebracht. Die freie Wahl der Form, der Größe, der Anzahl und der Anordnung dieser Elemente oder ihrer Kombinationen macht es möglich, die Art der Öffnungen an das Material des Schaltungsträgers, die Form des Flächenbereichs, die Form des Prägebereichs und die zu erwartende Hochprägung optimal anzupassen.

Die Löcher oder Schlitze können in einem regelmäßigen Muster in den Schaltungsträger eingebracht werden, z.B. mit gleichbleibenden Abständen oder Winkeln zwischen den Löchern bzw. Schlitzen, oder aber nach einem unregelmäßigen Muster angeordnet sein. Auch eine Kombination von regelmäßigen und unregelmäßigen Mustern oder eine flächenweise scheinbar zufällige Anordnung ist möglich. Auf diese Weise ist es z.B. möglich, Regionen in dem Flächenbereich, welche mit stets tatsächlich hochgeprägten Regionen des Prägebereichs überlappen, gemäß einem solchen Muster mit Löchern oder Schlitzen zu versehen, welches dem Muster entspricht, das durch die stets hochgeprägten Regionen definiert ist.

Vorzugsweise sind die Löcher oder Schlitze über die gesamte Fläche des Flächenbereichs des Schaltungsträgers verteilt angeordnet. Überlappt sich der Flächenbereich dann z.B. mit dem gesamten Prägebereich, so ist auch bei vorher nicht genau bekannter Position der tatsächlichen Hochprägung in dem Prägebereich sichergestellt, dass diese im gesamten Prägebereich möglich ist. Eine solche Verteilung kann einerseits gleichmäßig erfolgen, d.h. Löcher oder Schlitze bedecken den gesamten Flächenbereich mit einer gleichbleibenden lokalen Häufigkeit in nahezu gleichverteilter Weise. Andererseits können aber auch lokal dichtere und lokal weniger dichte Loch- oder Schlitzmuster in den Flächenbereich eingebracht werden. Dadurch kann der Flächenbereich auf eine entsprechend erwartete Verteilung der Hochprägung im Prägebereich optimal vorbereitet werden.

Insbesondere kann die Vielzahl der Löcher oder Schlitze derart in den Flächenbereich des Schaltungsträgers eingebracht werden, dass der Schaltungsträger beim Hochprägen des Datenträgers in dem Flächenbereich, insbesondere in den Bereichen der Löcher oder Schlitze, leicht verformbar ist.

Ist der Schaltungsträger beispielsweise mit Schlitzen in einem Kreuzmuster versehen, so lässt sich der Schaltungsträger in einer Region um das Zentrum des Kreuzmusters herum deutlich leichter verformen als ohne die entsprechenden Schlitze, da durch die Schlitze Schaltungsträgermaterial bereits teilweise vom restlichen Schaltungsträger getrennt ist. Andere Muster und Anordnungen sind möglich. Genauso können kleine Löcher in der Art einer Perforation zu dem gleichen Zweck geeignet angeordnet in den Schaltungsträger eingebracht werden wie auch sich über den gesamten Flächenbereich erstreckende schlangen- oder mäanderförmige zusammenhängende oder unzusammenhängende Linienschlitzmuster.

Das Einbringen von Löchern in den Flächenbereich des Schaltungsträgers kann noch einen weiteren Zweck erfüllen. Ist z.B. bekannt, an welchen Positionen des Prägebereichs Buchstaben oder Ziffern hochgeprägt werden können, so kann der Schaltungsträger in den entsprechenden Bereichen mit Löchern versehen werden, die die Form und Größe der Umrisse der potentiell einzuprägenden Zeichen aufweisen. Beim nachfolgenden Hochprägen leistet dann der Schaltungsträger in genau diesen Bereichen der zu prägenden Zeichen überhaupt keinen Widerstand, da das Schaltungsträgermaterial in genau diesen Bereichen komplett entfernt worden ist.

In einer weiteren Ausführungsform des erfindungsgemäßen Verfahrens wird dieser Ansatz noch deutlicher umgesetzt, indem die Öffnung in einer Form und einer Größe in den Flächenbereich des Schaltungsträgers eingebracht wird, die jeweils der Größe und Form des gesamten Prägebereichs entsprechen. Das heißt, das Schaltungsträgermaterial wird im Wesentlichen im gesamten Prägebereich komplett entfernt.

In jedem Fall kann sichergestellt werden, dass der Datenträgerkörper nach der Integration des Schaltungsträgers und vor dem Hochprägen keine variierenden Dickestufen aufweist und eine konstante Dicke besitzt.

Im Fall von kleinflächigen Löchern oder Schlitzen sind diese vorzugsweise in derartigen Formen und derartigen Größen in den Schaltungsträger eingebracht, dass sie ein Ausbilden von verschiedenen Dickestufen verhindern, beispielsweise beim Herstellen des Datenträgerkörpers durch Laminieren von verschiedenen Kunststofffolien, die den Schaltungsträger umgeben. Schlitze sind in dieser Hinsicht unproblematischer. Löcher sind vorzugsweise nicht zu groß und nicht zu flächig auszubilden, damit entsprechende Folien nicht darin einsinken können.

In anderen Fällen kann die zumindest eine Öffnung, die als eine oder mehrere flächige Aussparungen in der Form des zumindest einen Flächenbereichs in den Schaltungsträger eingebracht wird, mittels geeigneter Füllschichten, beispielsweise aus demselben Material wie der restliche Datenträgerkörper, gefüllt werden. Dies verhindert das Ausbilden von verschiedenen Dickestufen in dem Datenträgerkörper.

In einer bevorzugten Ausführungsform ist der erfindungsgemäße Datenträger eine Chipkarte mit einer Ausgabeeinrichtung, z.B. einem Display, und einer Eingabeeinrichtung, z.B. einer Tastatur. Dabei ist die jeweilige Elektronik, die die Ein- und Ausgabeeinrichtung steuert, auf den Schaltungsträger aufgebracht und mittels darauf ausgebildeter Verbindungsleitungen untereinander und mit dem Chip der Chipkarte verbunden. Vorzugsweise befinden sich in dem Flächenbereich des Schaltungsträgers keine Elektronik und keine Verbindungsleitungen, zumindest werden diese Leitungen nicht durch die Öffnungen durchtrennt. Der Schaltungsträger kann noch weitere Elemente tragen, z.B. eine als Spule ausgebildete Antenne des Datenträgers. Diese wird ohnehin in einem Randbereich des Schaltungsträgers angeordnet und kann dadurch leicht um den Flächenbereich herumgeführt werden.

Die Erfindung wird im Folgenden mit Bezug auf die begleitenden Zeichnungen beispielhaft beschrieben. Darin zeigen:
- Figur 1: eine erste bevorzugte Ausführungsform eines erfindungsgemäßen Schaltungsträgers;
- Figur 2: eine bevorzugte Ausführungsform eines erfindungsgemäßen Datenträgers mit integriertem Schaltungsträger aus Fig. 1;
- Figuren 3a und 3b: erste abgewandelte Ausführungsformen des Schaltungsträgers ähnlich der in Fig.1; und
- Figuren 4a und 4b: weitere Ausführungsformen des Schaltungsträgers.

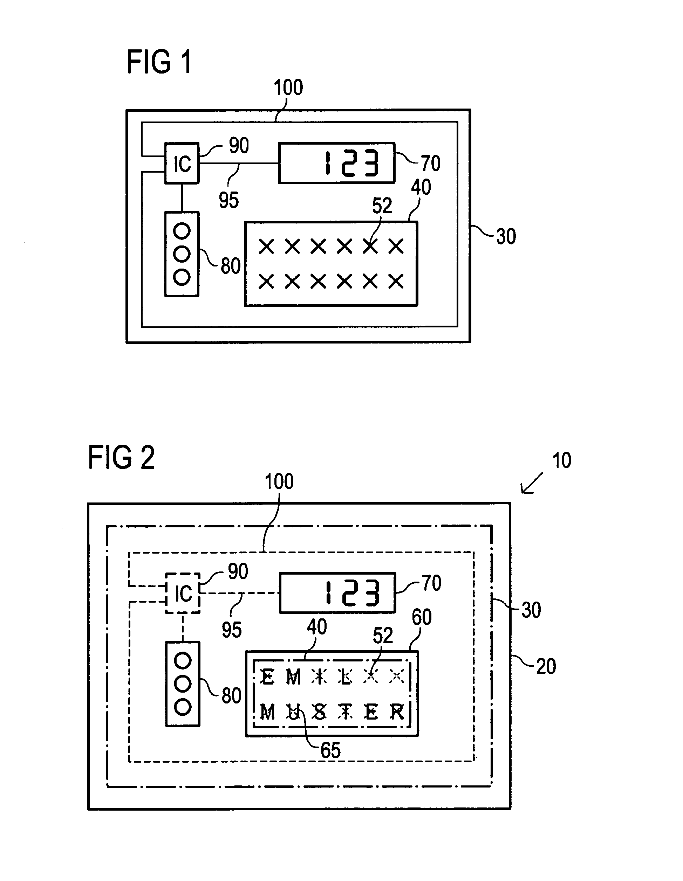

Figur 1 zeigt einen Schaltungsträger 30, der eingerichtet ist, in einen Datenträgerkörper 20 eines Datenträgers 10 integriert zu werden, wie es in Figur 2 schematisch dargestellt ist.

Mit Bezug auf Fig. 1 umfasst der flächige Schaltungsträger 30 einen integrierten Schaltkreis 90, eine Eingabeeinrichtung 80 in Form einer Tastatur und eine Ausgabeeinrichtung 70 in Form eines Displays. Dabei ist die Elektronik, die die Tastatur 80 und das Display 70 steuert, direkt auf den Schaltungsträger 30 aufgebracht und mittels Verbindungsleitungen 95 mit dem integrierten Schaltkreis 90 verbunden. Eine spulenförmige Antenne 100 ist mit dem integrierten Schaltkreis 90 verbunden und entlang des Randes auf dem Schaltungsträger 30 angeordnet. Die Spule kann dabei durch Ätzen oder Aufbringen einer gewickelten Spule gebildet werden. Die Antenne 100 kann auch eine andere Form annehmen oder aber gänzlich fehlen. Alternativ oder zusätzlich zu der Tastatur 80 und dem Display 70 kann sich weitere Elektronik (nicht gezeigt) für andere oder zusätzliche Funktionalitäten auf dem Schaltungsträger 30 befinden.

Der flächige Grundkörper des Schaltungsträgers 30 ist aus einer mit Epoxidharz getränkten Glasfasermatte gefertigt. Andere geeignete Materialien sind gleichfalls möglich, beispielsweise Hartpapier oder dergleichen. Im unteren rechten Quadranten des Schaltungsträgers 30 ist ein Flächenbereich 40 ausgezeichnet. Darin ist eine Vielzahl von paarweise kreuzförmig angeordneten Schlitzen 52 ausgebildet, die vollständig durch den Schaltungsträger 30 hindurchreichen, also eine durchgehende Öffnung darstellen. Die elektronischen Bauteile (integrierter Schaltkreis 90, Tastatur 80 und Display 70 mit ihrer Steuerelektronik), die Verbindungsleitungen 95 und die Antenne 100 sind dabei auf dem Schaltungsträger 30 derart angeordnet, dass der Flächenbereich 40 frei davon bleibt, zumindest im Bereich der Schlitze 52.

Figur 2 zeigt den Datenträger 10, in dessen Datenträgerkörper 20 der Schaltungsträger 30 integriert ist. Der Datenträgerkörper 20 besteht aus mehreren Kunststofffolien, die durch Laminieren miteinander verbunden sind. Der Schaltungsträger 30 wird dabei als eine Schicht derart in den Datenträgerkörper 20 integriert, dass jeweils mindestens eine Kunststofffolie auf und unter dem Schaltungsträger 30 angebracht ist. Zum Aufnehmen der Bauteile auf dem Schaltungsträger 30, z.B. der Tastatur 80, des Displays 70 und des integrierten Schaltkreises 90, besitzen einige der Folien an den entsprechenden Stellen Aussparungen. Alternativ können Kunststoffspritzgussteile, eventuell mit zusätzlichen abschließenden Schutzfolien, zum Bilden des Datenträgerkörpers 20 verwendet werden. Diese besitzen dann zum Aufnehmen des Schaltungsträgers 30 und seiner Bauteile entsprechende Kavitäten.

Die Schlitze 52 in dem Flächenbereich 40 des Schaltungsträgers 30 werden vor dem Integrieren des Schaltungsträgers 30 in den Datenträgerkörper 20 in dem Schaltungsträger 30 gebildet, beispielsweise mittels Stanzens.

Der in dem Schaltungsträger 30 ausgezeichnete Flächenbereich 40 mit der Vielzahl von Schlitzen 52 wird dabei derart in dem Datenträgerkörper 20 angeordnet, dass er sich mit einem Prägebereich 60 des Datenträgerkörpers 20 überlappt. Der Flächenbereich 40 und der Prägebereich 60 weisen dabei nahezu gleiche flächige Ausdehnungen auf. Es ist aber auch möglich, dass sich der Flächenbereich 40 mit dem Prägebereich 60 nur teilweise überlappt. Es ist weiterhin möglich, dass der Flächenbereich 40 und der Prägebereich 60 oder nur einer der beiden jeweils aus verschiedenen Teilflächenbereichen bzw. Teilprägebereichen bestehen, die an verschiedenen Stellen des Schaltungsträgers 30 bzw. des Datenträgerkörpers 20 angeordnet sind.

In dem Prägebereich 60 ist der Datenträgerkörper 20 mit einer Hochprägung 65 versehen. Die Buchstaben, die die Hochprägung 65 bilden, sind so angeordnet, dass sie jeweils genau über einem Paar der Schlitze 52 liegen. Das Muster, nach welchem die Schlitze 52 in dem Flächenbereich 40 angeordnet sind, entspricht genau dem Muster der Positionen in dem Prägebereich 60, in denen Zeichen hochgeprägt werden können. Jedoch muss nicht im Bereich jedes Schlitzpaars 52 ein Zeichen hochgeprägt werden. Der Datenträgerkörper 20 ist dadurch genau in den Bereichen, in denen Zeichen hochgeprägt werden können, ausreichend verformbar. Die Schlitze 52 in dem Schaltungsträger 30, dessen Material an sich eine sehr geringe Verformbarkeit besitzt, heben diese Eigenschaft lokal wieder auf, sodass zumindest die unmittelbar an die Schlitze 52 angrenzenden Materialabschnitte des Schaltungsträgers 30 hinreichend verformbar sind. Dadurch wird ein einfaches Hochprägen des Datenträgerkörpers 20 ermöglicht.

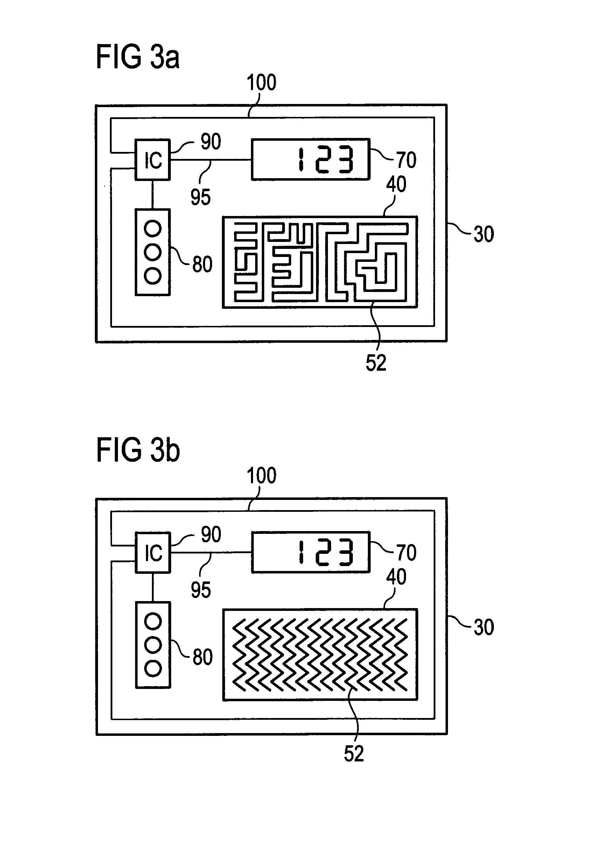

Die Schlitze 52 können alternativ eine andere Form und andere, auch unterschiedliche Längen aufweisen. Ihre Anordnung kann anderen Mustern folgen, welche auch unregelmäßig oder zufällig sein können, wie es nachfolgend mit Bezug auf die Figuren 3a und 3b beschrieben wird.

Der Schaltungsträger 30 aus Figur 3a besitzt als durchgehende Öffnung in dem Flächenbereich 40 anstelle der paarweise regelmäßig angeordneten Schlitze 52 nur einen Schlitz 52, der sich in einem unregelmäßigen Muster mäandernd über den gesamten Flächenbereich 40 zieht. Aufgrund der Form dieses Schlitzes 52 ist der Schaltungsträger 30 entlang des Schlitzes 52, also im gesamten Flächenbereich 40, leicht verformbar, da an jeder Stelle Schaltungsträgermaterial bereits teilweise von dem restlichen Schaltungsträger 30 gelöst ist. Zu dem gleichen Zweck kann aber auch eine Vielzahl von sich nicht kreuzenden Schlitzen 52 in den Schaltungsträger 30 eingebracht werden, welche nebeneinander angeordnet sind, wie es mit Bezug auf Fig. 3b dargestellt ist. Die Vielzahl der Schlitze 52 überdeckt in einem regelmäßigen Zick-Zack-Muster von parallel angeordneten durchgehenden Schlitzen 52 den Flächenbereich 40. Die Verteilung der Schlitze 52 ist dabei gleichmäßig.

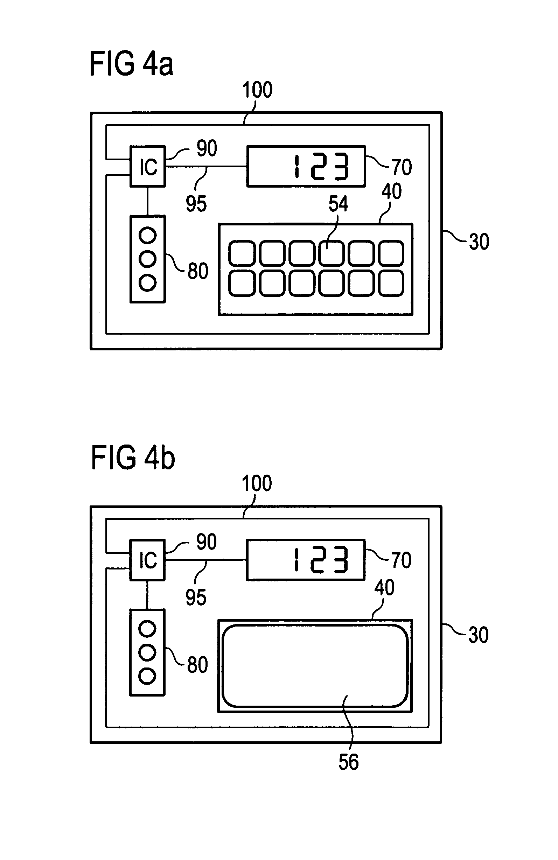

Zur leichteren Verformbarkeit des Schaltungsträgers 30 in dem Flächenbereich 40 können anstatt der Schlitze 52 kleinflächige Löcher 54 oder großflächige Öffnungen 56 einer anderen Form, Größe, Anzahl und Anordnung den Schaltungsträger 30 durchsetzen, wie es nachstehend mit Bezug auf die Figuren 4a und 4b beschrieben wird.

Figur 4a zeigt einen Schaltungsträger 30 ähnlich dem in Figur 1. Anstelle der sich paarweise kreuzenden Schlitze 52 weist der Schaltungsträger 30 an den gleichen Positionen kleinflächige Löcher 54 auf. Aufgrund dieser Löcher 54, wird ein Hochprägen des Datenträgerkörpers 20 im Bereich der Löcher 54 ermöglicht, da der Schaltungsträger 30 einer Verformung des Datenträgerkörpers 20 hier keinen Widerstand leistet. Die Löcher 54 sind regelmäßig angeordnet und folgen dem Muster, welches durch die Positionen der zu prägenden Zeichen definiert ist. Alternativ können sehr kleine, nahe beieinander angeordnete Löcher (nicht gezeigt) wie eine Perforation in dem Schaltungsträger 30 wirken. Wird der Datenträgerkörper 20 dann im Bereich einer solchen Perforation hochgeprägt, so verformt sich der Schaltungsträger 30 entlang der Perforation leichter als ohne diese. Dadurch ist der Widerstand gegen ein Verformen, der dem Datenträgerkörper 20 durch den Schaltungsträger 30 beim Hochprägen entgegengesetzt wird, herabgesetzt und das Hochprägen wird erleichtert.

Bei dem Schaltungsträger 30 aus Figur 4b ist in dem Flächenbereich 40 des Schaltungsträgers 30 nur eine durchgehende Öffnung 56 ausgebildet, deren Form und Größe jeweils der Form und Größe des Flächenbereichs 40 entsprechen. Das heißt, im Wesentlichen ist der gesamte Flächenbereich 40 von Schaltungsträgermaterial befreit. Eine Hochprägung 65 im mit der Öffnung 56 überlappenden Prägebereich 60 des Datenträgerkörpers 20 ist also an jeder Stelle des Flächenbereichs 40 ebenso leicht möglich wie in einem Datenträger ohne integrierten Schaltungsträger 30. Beim Aufbauen des Datenträgerkörpers 20 und dem Integrieren des Schaltungsträgers 30 muss die Öffnung 56 entsprechend mit Datenträgermaterial gefüllt werden, um ein Herausbilden von verschiedenen Dickestufen in dem Datenträgerkörper 20 zu vermeiden. Das gleiche gilt für die Löcher 54 in dem Schaltungsträger 30 aus Fig. 4a, sofern sie eine bestimmte Größe überschreiten.

## Patentansprüche

1. Verfahren zum Herstellen eines portablen kartenförmigen Datenträgers (10), umfassend die Schritte:
- Bereitstellen eines flächigen Schaltungsträgers (30); wobei in zumindest einen Flächenbereich (40) des flächigen Schaltungsträgers (30) zumindest eine durchgehende Öffnung (52; 54; 56) eingebracht wird;
- Integrieren des Schaltungsträgers (30) in einen kartenförmigen Datenträgerkörper (20);
**dadurch gekennzeichnet, dass** der Datenträgerkörper (20) in einem mit dem zumindest einen Flächenbereich (40) des integrierten Schaltungsträgers (30) überlappenden Prägebereich (60) des Datenträgerkörpers (20) hochgeprägt wird.

2. Verfahren nach Anspruch 1, **dadurch gekennzeichnet, dass** in den zumindest einen Flächenbereich (40) des Schaltungsträgers (30) eine Vielzahl von durchgehenden Löchern (54) und/oder durchgehenden Schlitzen (52) eingebracht wird.

3. Verfahren nach Anspruch 2, **dadurch gekennzeichnet, dass** die Vielzahl von durchgehenden Löchern (54) und/ oder durchgehenden Schlitzen (52) in einem regelmäßigen oder unregelmäßigen Muster in den zumindest einen Flächenbereich (40) des Schaltungsträgers (30) eingebracht wird.

4. Verfahren nach Anspruch 2 oder 3, **dadurch gekennzeichnet, dass** die Vielzahl von durchgehenden Löchern (54) und/ oder durchgehenden Schlitzen (52) im Wesentlichen über den gesamten zumindest einen Flächenbereich (40) des Schaltungsträgers (30) verteilt eingebracht wird.

5. Verfahren nach einem der Ansprüche 2 bis 4, **dadurch gekennzeichnet, dass** die Vielzahl von durchgehenden Löchern (54) und/ oder durchgehenden Schlitzen (52) derart in den zumindest einen Flächenbereich (40) des Schaltungsträgers (30) eingebracht wird, dass der Schaltungsträger (30) beim Hochprägen des Datenträgerkörpers (20) in dem Prägebereich (60) in dem zumindest einen Flächenbereich (40) verformbar ist, insbesondere in an die durchgehenden Löcher (54) und/ oder Schlitze (52) angrenzenden Bereichen des Schaltungsträgers (30).

6. Verfahren nach einem der Ansprüche 2 bis 5, **dadurch gekennzeichnet, dass** die Vielzahl von durchgehenden Löchern (54) und/oder durchgehenden Schlitzen (52) mit derartigen Größen und derartigen Formen in den zumindest einen Flächenbereich (40) des Schaltungsträgers (30) eingebracht wird, dass der Datenträgerkörper (20) eine im Wesentlichen konstante Dicke aufweist.

7. Verfahren nach Anspruch 1, **dadurch gekennzeichnet, dass** die zumindest eine durchgehende Öffnung (56) in einer Größe und einer Form in den zumindest einen Flächenbereich (40) des Schaltungsträger (30) eingebracht wird, die jeweils im Wesentlichen der Größe und der Form des den Flächenbereich (40) überlappenden Prägebereichs (60) entsprechen.

8. Verfahren nach einem der Ansprüche 1 bis 7, **dadurch gekennzeichnet, dass** die zumindest eine durchgehende Öffnung (52; 54; 56) vor dem Integrieren des Schaltungsträgers (30) in den Datenträgerkörper (20) in den zumindest einen Flächenbereich (40) des Schaltungsträgers (30) eingebracht wird.

9. Verfahren nach einem der Ansprüche 1 bis 8, **dadurch gekennzeichnet, dass** die flächige Ausdehnung des zumindest einen Flächenbereichs (40) des Schaltungsträgers (30) derart gewählt wird, dass sie im Wesentlichen der flächigen Ausdehnung des Prägebereichs (60) des Datenträgerkörpers (20) entspricht.

10. Portabler Datenträger (10), umfassend einen in einen kartenförmigen Datenträgerkörper (20) des Datenträgers (10) integrierten flächigen Schaltungsträger (30) und eine Hochprägung (65) in dem Datenträgerkörper (20), **dadurch gekennzeichnet, dass** zumindest ein Flächenbereich (40) des flächigen Schaltungsträgers (30) zumindest eine durchgehende Öffnung (52; 54; 56) aufweist und der Datenträgerkörper (20) in einem mit dem zumindest einen Flächenbereich (40) des integrierten Schaltungsträgers (30) überlappenden Prägebereich (60) des Datenträgerkörpers (20) hochgeprägt ist.

11. Datenträger (10) nach Anspruch 10, **gekennzeichnet durch** eine Ausgabeeinrichtung (70) und/ oder eine Eingabeeinrichtung (80), deren steuernde Elektronik jeweils außerhalb des zumindest einen Flächenbereichs (40) auf dem integrierten Schaltungsträger (30) aufgebracht ist.

12. Verwendung eines flächigen Schaltungsträgers (30) zum Herstellen eines portablen Datenträgers (10) durch Integrieren des Schaltungsträgers (30) in einen kartenförmigen Datenträgerkörper (20) des portablen Datenträgers (10), wobei zumindest ein Flächenbereich (40) des Schaltungsträgers (30) zumindest eine durchgehende Öffnung (52; 54; 56) aufweist, die ein Hochprägen des Datenträgerkörpers (20) ermöglicht, zur Herstellung eines portablen kartenförmigen Datenträgers (10) mit einem Verfahren nach einem der Ansprüche 1 bis 9.

## Claims

1. A method for producing a portable card-shaped data carrier (10) comprising the steps of:
- making available a flat circuit carrier (30); wherein in at least one surface region (40) of the flat circuit carrier (30) at least one through opening (52; 54; 56) is incorporated;
- integrating the circuit carrier (30) in a card-shaped data carrier body (20);
**characterized in that** the data carrier body (20) is high-embossed in an embossing region (60) of the data carrier body (20) which overlaps with the at least one surface region (40) of the integrated circuit carrier (30).

2. The method according to claim 1, **characterized in that** in the at least one surface region (40) of the circuit carrier (30) a multiplicity of through holes (54) and/ or through slits (52) is incorporated.

3. The method according to claim 2, **characterized in that** the multiplicity of through holes (54) and/ or through slits (52) is incorporated in a regular or irregular pattern in the at least one surface region (40) of the circuit carrier (30).

4. The method according to claim 2 or 3, **characterized in that** the multiplicity of through holes (54) and/ or through slits (52) are incorporated such that they are distributed substantially over the complete at least one surface region (40) of the circuit carrier (30).

5. The method according to any of the claims 2 to 4, **characterized in that** the multiplicity of through holes (54) and/ or through slits (52) are so incorporated in the at least one surface region (40) of the circuit carrier (30) that, upon high embossing the data carrier body (20) in the embossing region (60), the circuit carrier (30) is deformable in the at least one surface region (40), in particular in regions of the circuit carrier (30) which are adjacent to the through holes (54) and/ or slits (52).

6. The method according to any of the claims 2 to 5, **characterized in that** the multiplicity of through holes (54) and/ or through slits (52) are incorporated in the at least one surface region (40) of the circuit carrier (30) in such sizes and such shapes that the data carrier body (20) has a substantially constant thickness.

7. The method according to claim 1, **characterized in that** the at least one through opening (56) is incorporated in the at least one surface region (40) of the circuit carrier (30) in such a size and such a shape which substantially correspond to the size and the shape of the embossing region (60) overlapping with the surface region (40).

8. The method according to any of the claims 1 to 7, **characterized in that** the at least one through opening (52; 54; 56) is incorporated in the at least one surface region (40) of the circuit carrier (30) before the circuit carrier (30) is integrated in the data carrier body (20).

9. The method according to any of the claims 1 to 8, **characterized in that** the areal extension of the at least one surface region (40) of the circuit carrier (30) is chosen such that it substantially corresponds to the areal extension of the embossing region (60) of the data carrier body (20).

10. A portable data carrier (10), comprising a flat circuit carrier (30) integrated in a card-shaped data carrier body (20) of the data carrier (10) and a high embossing (65) in the data carrier body (20), **characterized in that** at least one surface region (40) of the flat circuit carrier (30) has at least one through opening (52; 54; 56) and the data carrier body (20) is high embossed in an embossing region (60) of the data carrier body (20) which overlaps with the at least one surface region (40) of the integrated circuit carrier (30).

11. The data carrier (10) according to claim 10, **characterized by** an output device (70) and/ or an input device (80), the controlling electronics of which are applied on the integrated circuit carrier (30) respectively outside the at least one surface region (40).

12. The use of a flat circuit carrier (30) for manufacturing a portable data carrier (10) by integrating the circuit carrier (30) in a card-shaped data carrier body (20) of the portable data carrier (10), wherein at least one surface region (40) of the circuit carrier (30) has at least one through opening (52; 54; 56) that makes a high embossing of the data carrier body (20) possible, for manufacturing a portable card-shaped data carrier (10) with a method according to any of the claims 1 to 9.

## Revendications

1. Procédé de fabrication d'un support de données (10) portable en forme de carte, comprenant les étapes:
- mise à disposition d'un support de circuit (30) étendu; cependant que, dans moins une zone de surface (40) du support de circuit (30) étendu, au moins une ouverture (52; 54; 56) traversante est pratiquée;
- intégration du support de circuit (30) dans un corps de support de données (20) en forme de carte;
**caractérisé en ce que** le corps de support de données (20) est, dans une zone de gaufrage (60) du corps de support de données (20) se chevauchant avec la au moins une zone de surface (40) du support de circuit (30) intégré, gaufré en relief.

2. Procédé selon la revendication 1, **caractérisé en ce que**, dans la au moins une zone de surface (40) du support de circuit (30), une pluralité de trous (54) traversants et/ou de fentes (52) traversantes est pratiquée.

3. Procédé selon la revendication 2, **caractérisé en ce que** la pluralité de trous (54) traversants et/ou de fentes (52) traversantes est pratiquée en un motif régulier ou irrégulier dans la au moins une zone de surface (40) du support de circuit (30).

4. Procédé selon la revendication 2 ou 3, **caractérisé en ce que** la pluralité de trous (54) traversants et/ou de fentes (52) traversantes est essentiellement pratiquée sur la totalité de la au moins une zone de surface (40) du support de circuit (30).

5. Procédé selon une des revendications de 2 à 4, **caractérisé en ce que** la pluralité de trous (54) traversants et/ou de fentes (52) traversantes est pratiquée de telle manière dans la au moins une zone de surface (40) du support de circuit (30) que le support de circuit (30), lors du gaufrage en relief du corps de support de données (20) dans la zone de gaufrage (60), est déformable dans la au moins une zone de surface (40), en particulier dans des zones du support de circuit (30) adjacentes aux trous (54) et/ou fentes (52) traversants.

6. Procédé selon une des revendications de 2 à 5, **caractérisé en ce que** la pluralité de trous (54) traversants et/ou de fentes (52) traversantes est pratiquée en de telles tailles et en de telles formes dans la au moins une zone de surface (40) du support de circuit (30) que le corps de support de données (20) présente une épaisseur essentiellement constante.

7. Procédé selon la revendication 1, **caractérisé en ce que** la au moins une ouverture (56) traversante est pratiquée dans la au moins une zone de surface (40) du support de circuit (30) en une taille et en une forme qui correspondent respectivement essentiellement à la taille et à la forme de la zone de gaufrage (60) chevauchant la zone de surface (40).

8. Procédé selon une des revendications de 1 à 7, **caractérisé en ce que** c'est avant l'intégration du support de circuit (30) dans le corps de support de données (20) que la au moins une ouverture (52; 54; 56) traversante est pratiquée dans la au moins une zone de surface (40) du support de circuit (30).

9. Procédé selon une des revendications de 1 à 8, **caractérisé en ce que** l'extension étendue de la au moins une zone de surface (40) du support de circuit (30) est choisie de telle manière qu'elle correspond essentiellement à l'extension étendue de la zone de gaufrage (60) du corps de support de données (20).

10. Support de données (10) portable comprenant un support de circuit (30) étendu intégré dans un corps de support de données (20) en forme de carte du support de données (10) et un gaufrage en relief (65) dans le corps de support de données (20), **caractérisé en ce qu'**au moins une zone de surface (40) du support de circuit (30) étendu comporte au moins une ouverture (52; 54; 56) traversante et **en ce que** le corps de support de données (20) est gaufré en relief dans une zone de gaufrage (60) du corps de support de données (20) se chevauchant avec la au moins une zone de surface (40) du support de circuit (30) intégré.

11. Support de données (10) selon la revendication 10, **caractérisé par** un dispositif de sortie (70) et/ou par un dispositif d'entrée (80) dont l'électronique de commande est placée respectivement à l'extérieur de la au moins une zone de surface (40) sur le support de circuit (30) intégré.

12. Utilisation d'un support de circuit (30) étendu pour la fabrication d'un support de données (10) portable par intégration du support de circuit (30) dans un corps de support de données (20) en forme de carte du support de données (10) portable, au moins une zone de surface (40) du support de circuit (30) comportant au moins une ouverture (52; 54; 56) traversante qui permet un gaufrage en relief du corps de support de données (20) pour la fabrication d'un support de données (10) portable en forme de carte suivant un procédé selon une des revendications de 1 à 9.
